# EUROPEAN PATENT APPLICATION

(11) **EP 4 811 223 A1**
(43) Date of publication of application: **23.09.2026**
(21) Application number: 25305410.0
(22) Date of filing: 22.03.2025
(51) Int. Cl.: G06N 10/40, G06N 5/01, G06N 10/70

(54) **METHOD FOR DETERMINING FLUXMAP PARAMETERS OF A QUANTUM SYSTEM COMPRISING A PLURALITY OF SUPERCONDUCTING LOOPS**

(71) Applicant: Alice & Bob, 75015 Paris (FR)
(72) Inventor: BEUGNOT, Gaspard, 75015 Paris (FR); MURANI, Anil, 75015 Paris (FR)
(74) Representative: Atout PI Laplace

(57) **Abstract**

A method for determining fluxmap parameters of a quantum system comprising a plurality of superconducting loops, comprises:
a) receiving a quantum system fluxmap model comprising at least one fixed parameter forming a set of fluxmap parameters and at least one variable parameter forming a set of control parameters,
b) obtaining a first set of control parameters (200) as a current set of control parameters and a first set of fluxmap parameters as a current set of fluxmap parameters,
c) controlling the quantum system (220) with said current set of control parameters, and measuring at least one fluxmap-related physical quantity on the quantum system,
d) deriving (230) a new current set of fluxmap parameters from said quantum system fluxmap model and from all of said at least one fluxmap-related physical quantity measured at the current and at previous iterations of operation c),
e) determining (240) a new current set of control parameters based on said new current set of fluxmap parameters, said quantum system fluxmap model and said current set of control parameters,
f) repeating operations c) to e) until a condition relating to the quantum system fluxmap model and all of said at least one fluxmap-related physical quantity measured at the current and at previous iterations of operation c) is met.

## Description

The invention concerns a method for determining fluxmap parameters of a quantum system comprising a plurality of superconducting loops.

Quantum systems which comprise a plurality of superconducting loops can be simulated in order to characterize or calibrate their physical operation as a function of the magnetic fluxes threading each of the superconducting loops. For example, in the case of quantum circuits comprising one or more asymmetrically threaded SQUIDs (ATSs - a pair of Josephson junctions connected in parallel and shunted by an inductance so as to form two loops), it is useful to determine the so-called "saddle points" of each ATS in the fluxmap which plots the dependence of a physical characteristic (such as frequency of the buffer mode coupled to or comprising the ATS) and the applied magnetic fluxes through the two loops of the ATS.

This is conventionally done by sweeping the control parameters of the quantum circuit, measuring each time a physical quantity which relates to the flux, and thereby building the fluxmap. The more precise the sweeping, the better the fluxmap, but also the longer the acquisition time.

Several articles propose the determination of a fluxmap based on measurements, such as:
Berdou, Camille, et al. "One hundred second bit-flip time in a two-photon dissipative oscillator" PRX Quantum 4.2 (2023): 020350, Lescanne, Raphaël, et al. "Exponential suppression of bit-flips in a qubit encoded in an oscillator" Nature Physics 16.5 (2020): 509-513, and Réglade, Ulysse, et al. "Quantum control of a cat qubit with bit-flip times exceeding ten seconds" Nature 629.8013 (2024): 778-783. All of these articles propose fully sweeping a grid of parameters to build the fluxmap, which is extremely time consuming and prone to more risk due to the massive amount of measurements to be performed.

The invention aims at improving the situation. To this end, the Applicant proposes a method for determining fluxmap parameters of a quantum system comprising a plurality of superconducting loops, comprising:
a) receiving a quantum system fluxmap model comprising at least one fixed parameter forming a set of fluxmap parameters and at least one variable parameter forming a set of control parameters,
b) obtaining a first set of control parameters as a current set of control parameters and a first set of fluxmap parameters as a current set of fluxmap parameters,
c) controlling the quantum system with said current set of control parameters, and measuring at least one fluxmap-related physical quantity on the quantum system,
d) deriving a new current set of fluxmap parameters from said quantum system fluxmap model and from all of said at least one fluxmap-related physical quantity measured at the current and at previous iterations of operation c),
e) determining a new current set of control parameters based on said new current set of fluxmap parameters, said quantum system fluxmap model and said current set of control parameters,
f) repeating operations c) to e) until a condition relating to the quantum system fluxmap model and all of said at least one fluxmap-related physical quantity measured at the current and at previous iterations of operation c) is met.

This method is advantageous because it allows to determine the parameters which characterize the fluxmap of a physical quantum system with a limited amount of measurement points. This means that the physical quantum system's behaviour can not only be characterized more precisely, but also in a time which is orders of magnitude faster than what has commonly been achieved until now.

In various embodiments, the method may present one or more of the following features:
- said quantum system comprises one or more asymmetric threaded squid (ATS) providing at least some of the superconducting loops, said control parameters comprise two ATS flux lines voltage controls, and said at least one measured fluxmap-related physical quantity is a spectroscopy function of a buffer mode of the quantum system,
- operation d) comprises:
   d1) deriving a resonant frequency, or the absence thereof, from said measured at least one fluxmap-related physical quantity,
   d2) determining a plurality of candidate set of fluxmap parameters derived from the current set of fluxmap parameters and/or said first set of fluxmap parameters,
   d3) deriving said new current set of fluxmap parameters from said quantum system fluxmap model, said plurality of candidate set of fluxmap parameters and all of said at least one fluxmap-related physical quantity measured at the current and at previous iterations of operation c),
- operation e) comprises
   e1) determining a plurality of candidate set of control parameters derived from the current set of control parameters,
   e2) defining one of said plurality of candidate set of control parameters as said new current set of control parameters by applying said fluxmap model or its gradient to each of said candidate set of control parameters with said new current set of fluxmap parameters, and choosing said new current set of control parameters based on the results,
- operation e2) comprises calculating a loss function for each candidate in said set of control parameters according to the following formula: *L*(*Cand, Meal*[], *FPc*) = *w ℓ_{resonance}* + (1 - *w*) *ℓ_{neighbors}* with ${l}_{resonance} = exp \left(\frac{\left|Circ\left(Cand, FPc\right)-Meal\left[f\right]\right|}{{σ}_{f}}\right)$ and ${l}_{neighbors} = {\sum }_{t = 1}^{T} exp \left(-\frac{{\left‖Cand-Meas\left[CPc, t\right]\right‖}^{2}}{{σ}_{d}}\right)$ where *Circ*() is the fluxmap model, Cand is a candidate set of control parameters, FPc is the current set of fluxmap parameters, Meal[f] is the resonant frequency for the most recent measurement, T is the total number of measurements, *Meas*[*CPc, t*] is the set of control parameters of the t-th measurement, and w, *σ_{f}* and *σ_{d}* are loss function parameters,
- operation e2) comprises calculating a Fischer Information Matrix $FIM \left(Cand,Meas\left[\right],FPc\right) = {\sum }_{t = 1}^{T} \frac{\partial f \left(Meas\left[CPc, t\right],FPc\right)}{\partial p} \frac{\partial f {\left(Meas\left[CPc, t\right],FPc\right)}^{T}}{\partial p} +$ $\frac{\partial f \left(Cand, FPc\right)}{\partial p} \frac{\partial f {\left(Cand.FPc\right)}^{T}}{\partial p}$, where Cand is a candidate set of control parameters, Meas[CPc,t] is the set of control parameters used for the t-th measurement, FPc is the current set of fluxmap parameters, and f() is the fluxmap model, and by choosing the candidate which optimizes the determinant of the FIM matrix or the trace of the FIM matrix, and
- operations b) and c) comprise using several sets of current control parameters and obtaining several measurements, and in which operations d) and e) comprise using the corresponding several measurements.

The invention also concerns a device comprising: a quantum system comprising a plurality of superconducting loops; and a command circuit configured to send one or more control signals to the quantum system to control the quantum system, wherein the command circuit is further configured to perform the method above. It further concerns a computer program product comprising instructions which, when executed by processing circuitry, causes the command circuit to carry out the method above, and a computer-readable medium having stored thereon this computer program product.

Other features and advantages of the invention will readily appear in the following description of the drawings, which show exemplary embodiments of the invention and on which:
- Figure 1 shows a diagram of a computer system which interacts with a physical quantum system to perform a method according to a first aspect,
- Figure 2 shows a generic diagram of an exemplary embodiment of the method according to a first aspect,
- Figure 3 shows an exemplary embodiment of an operation of figure 2,
- Figure 4 shows an exemplary embodiment of an operation of figure 3,
- Figure 5 shows fluxmap-related physical quantity measurements of a quantum system obtained by the system of figure 1 which are used to derive a fluxmap measurement used in the method of figure 2,
- Figure 6 shows an exemplary fluxmap measured by sweeping the control parameters of the quantum circuit, the measurements performed by the method of figure 2, and the fluxmap which is the result of the method of figure 2 based on these measurements,
- Figure 7 shows exemplary fluxmaps which are the result of the method of figure 2 based on measurements based on synthetic examples, and
- Figure 8 shows an embodiment of a cat qubit device, control qubit device and linear coupling between the control qubit device and the target cat qubit device.

The drawings and the following description are comprised for the most part of positive and well-defined features. As a result, they are not only useful in understanding the invention, but they can also be used to contribute to its definition, should the need arise.

The description may make reference or use elements protected or protectable by copyright. The Applicant does not object to the reproduction of those elements in as much as it is limited to the necessary legal publications, however this should not be construed as a waiver of rights or any form of licence.

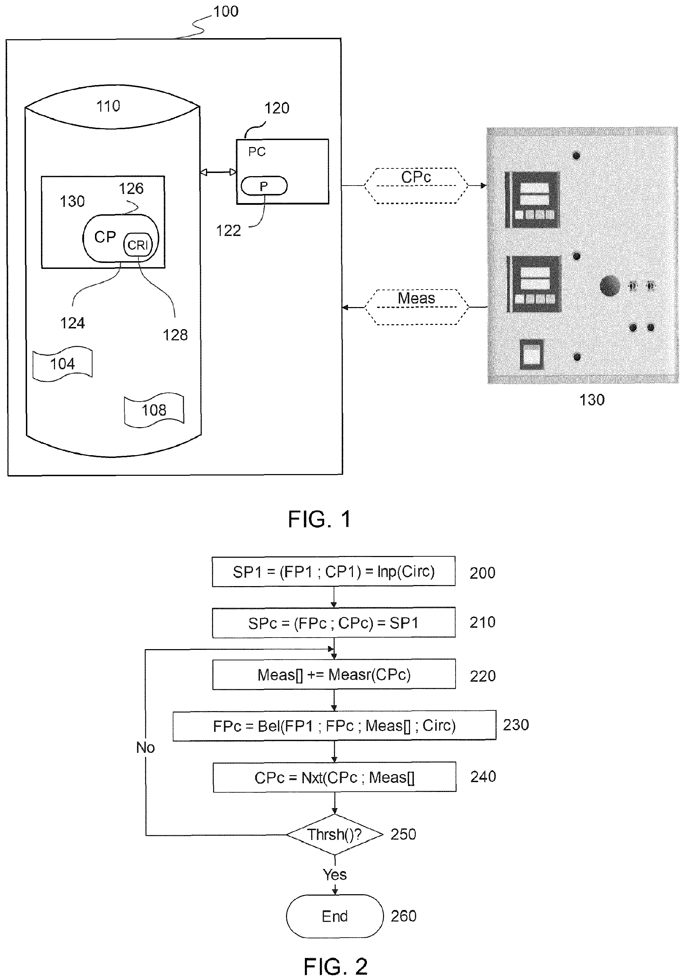

Figure 1 shows a general diagram on an embodiment of the computer device according to the invention.

The computer device shown on Figure 1 as a block diagram of a device 100 (e.g., a network node, connected device, and the like), according to an embodiment. As shown in figure 1, device 100 may comprise: processing circuitry (PC) 102, which may include one or more processors (P) 104; a network interface 106 comprising a transmitter (Tx) 108 and a receiver (Rx) 110 for enabling the device to transmit data to and receive data from other computing devices connected to a network 112 (e.g., an Internet Protocol (IP) network) to which network interface 106 is connected; and a local storage unit (a.k.a., "data storage") 114, which may include one or more non-volatile storage devices and/or one or more volatile storage devices.

In embodiments where PC 102 includes a programmable processor, a computer program product (CPP) 116 may be provided. CPP 116 includes a computer readable medium (CRM) 118 storing a computer program (CP) 120 comprising computer readable instructions (CRI) 122. CRM 118 may be a non-transitory computer readable medium, such as, magnetic media (e.g., a hard disk), optical media, memory devices (e.g., random access memory, flash memory), and the like.

Processors 104 include any means known for performing automated calculus, such as CPUs, GPUs, CPUs and/or GPUs grids, remote calculus grids, specifically configured FPGAs, specifically configured ASICs, specialized chips such as SOCs or NOCs, AI specialized chips, etc.

In an embodiment, data storage 114 stores one or more quantum circuit fluxmap models, as well as fluxmap-related physical quantity measurements. A quantum circuit fluxmap model generally comprises a fluxmap formula which comprises fluxmap parameters which are fixed, and control parameters which are variable.

One of the advantages achieved by the invention is to allow to determine a precise characterization of a physical quantum system with a limited amount of measurements. This is obtained by performing measurements on the physical quantum system, and by using these measurements to progressively refine the fluxmap parameters which fit the measurements in view of the fluxmap formula and the control parameters used to obtain these measurements.

On figure 1, the reference 130 designates the quantum system comprising a plurality of superconducting loops, which is controlled by a set of control parameters CPc which are sent by the device 100. In return, the device 100 receives a measurement Meas which is a physical quantity measured on the quantum system and which is related to the flux. For example, the quantum system may be a superconducting quantum circuit which comprises an ATS and which is arranged to host a cat qubit. In this case, the control parameters may be the voltage controls of the two flux lines of the ATS, whereas the physical quantity which is measured may be the spectroscopy function of a buffer mode of the quantum system.

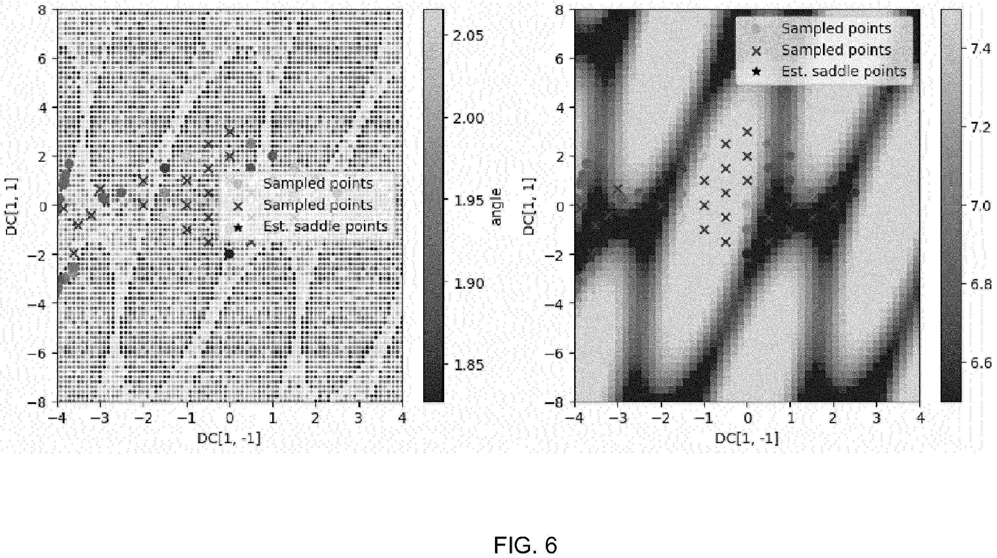

Figure 6 shows an exemplary fluxmap measured for this example by sweeping the control parameters of a quantum circuit (on the left), the measurements performed by the method of figure 2 (on the left), and the fluxmap which is the result of the method of figure 2 based on these measurements (on the right).

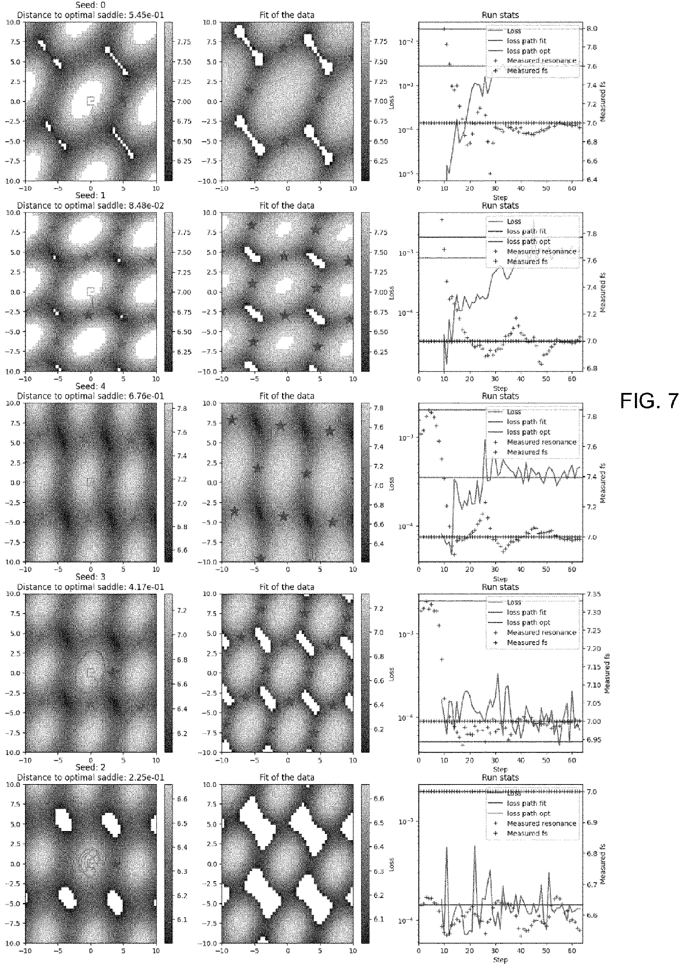

Figure 7 shows results of the method of the invention on 5 synthetic examples. The left most images show the ground truth. The lighter stars show the position of the real saddle points and the darker stars show the position of the estimated saddle point, closest to 0. The center images show the fit achieved by the method of the invention, and notably how the lighter and darker stars become substantially all aligned. The right most images show some metrics of each case.

In the example described herein, the data storage 114 may be realized in any way suitable, that is by means of a hard disk drive, a solid-state drive, a flash memory, a disk (CD or DVD), a memory embedded in a processor, a distant storage accessible in the cloud, etc. Data storage 114 may also store any transitory data which may be generated in the course of executing the invention, as well as maps resulting from the operation of the device 2, possibly combined with experimenter made annotations.

Figure 2 shows an exemplary embodiment of a method according to a first aspect.

The method starts with a first operation 200 in which the first set of parameters SP1 is determined. As will appear below, each set of parameters comprises a set of one or more fluxmap parameters, and a set of one or more control parameters. As a result, the first set of parameters SP1 comprises a first set of fluxmap parameters FP1 and a first set of control parameters CP1.

In the example described here, the first set of control parameters SP1 is obtained as a result of a function Inp() which receives a fluxmap model Circ. In the example mentioned above, the fluxmap model Circ may be a function f() as follows: $\begin{matrix}f \left(CPc, FPc\right) = \frac{{f}_{sandle} \sqrt{{L}_{offset} + {L}_{saddle}}}{\sqrt{{L}_{offset} + {L}_{ATS}}} with {L}_{ATS} \left(CPc\right) = ATS \left(MCPc+{ϕ}_{offset},μ,d\right) , CPc = \\ \left(\begin{matrix}{V}_{left} \\ {V}_{right}\end{matrix}\right) , and {L}_{saddle} = {L}_{ATS} \left(ϕ=\left(\begin{matrix}\frac{π}{2} \\ \frac{π}{2}\end{matrix}\right)\right)\end{matrix}$

This means that the set of fluxmap parameters comprises 10 parameters:
- 6 geometrical parameters converting DC to fluxes: a 2×2 matrix M and a size 2 vector *ϕ_{offset}*;
- 2 parameters for the ATS: µ and d and
- 2 parameters for the geometry of the fluxmap: frequency of the buffer at the saddle point *f_{saddle}* and stray inductance *L_{offset}.*

Function Inp() may for example use a microwave simulator such as that for which the Applicant has filed patent application EP24305324 in order to calculate FP1 as a first approximation for the set of fluxmap parameters. The set of control parameters CP1 may be chosen to be close to a supposed saddle point or it may be chosen randomly in the array of values available. Alternatively, the set of fluxmap parameters FP1 and/or the set of control parameters CP1 may be input by a user or otherwise.

The set of parameters SP1 is then copied in a current set of parameters SPc in an operation 210. The set of parameters SPc will be used as a variable in a loop which is used to determine the set of flux parameters which best approximate the experiments on the quantum system in view of the fluxmap model Circ. The current set of parameters SPc comprises a current set of fluxmap parameters FPc and a current set of control parameters CPc. In the following, the current set of fluxmap parameters FPc may also be referred to as "the belief" or "the current belief" as it represents the set of fluxmap parameters which are currently considered in the loop as best approximating the quantum system's behavior.

The loop begins with an operation 220 in which the device 100 sends the set of control parameters CPc to the quantum by means of a function Measr(), and receives in return a measurement of a physical quantity which is related to the fluxmap of the quantum system. This measurement is stored in a table Meas[] in which each entry associates a measurement achieved with the current set of parameters SPc which were in the loop when the measurement was performed.

In the example discussed above, the physical quantity may be parameters from the spectroscopy function *S*₁₁ of the buffer, such as: the·resonant frequency *fᵣₑₛ*, the·line-width of the resonant frequency *κ*, drive coupling *κ*₀, phase-offset *φ*₀ in the case of impedance mismatch, or real and imaginary parts of the input power *aᵢₙ*. Among these parameters, the·resonant frequency *fᵣₑₛ* is the most useful in the Applicant's tests.

For a detailed explanation on the spectroscopy function *S*₁₁, one may consider that the spectroscopy function can be expressed as follows: *S*(*ω*) *= αS*₁₁(*ω*)*ₑ^{iλω}* where λ describes the electrical delay between the buffer line and the measurement device which has the effect of a linear rotating phase, and *S*₁₁(*ω*) is a function of the parameters referred to in the previous paragraph and of ω.

There are a variety of ways in which the parameters mentioned above with respect to the spectroscopy function *S*₁₁ of the buffer can be determined, including but not limited to the following fitting methods:
- SK (Sanathanan-Koemer) Iteration, as explained in the article by Sanathanan et al. "Transfer function synthesis as a ratio of two complex polynomials", IEEE Transactions on Automatic Control, 8(1), 56-58, doi 10.1109/TAC.1963.1105517 ;
- polyrat (see https://polyrat.readthedocs.io/en/latestl) ;
- Vector Fitting, as explained in the article by Gustavsen et al. "Rational approximation of frequency domain responses by vector fitting", IEEE Transactions on Power Delivery, 14(3), 1052-1061, doi 10.1109/61.772353 ;
- Adaptive Anderson Antoulas as explained in the article by Nakatsukasa et al. "The AAA Algorithm for Rational Approximation", SIAM Journal on Scientific Computing, 40(3), Al 494-Al 522, doi 10.1137/16M110622 ;
- Argmax fitting, which only looks at the angle of *S*₁₁(*ω*), and identifies if there is a resonant frequency.

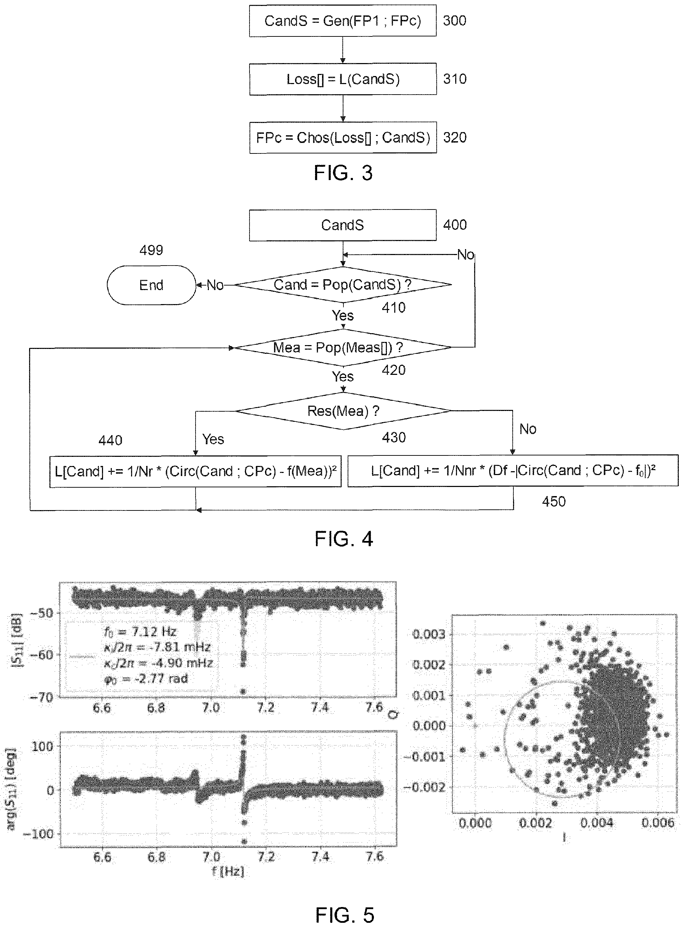

Argmax fitting has been found particularly convenient by the Applicant, and is performed by determining the frequencies with (i) the largest gradient (in absolute value), (ii) the largest amplitude, and (iii) the smallest amplitude. If the three frequencies are sufficiently close, it is considered that a resonance has been found, with frequency equal to the median of the three. Unlike the other algorithms, this can only identify the resonant frequency, but not the other spectroscopic parameters. An example of this method is shown on figure 5.

In the example described here, there is only one measurement which is performed. However, in an alternative embodiment, the current set of control parameters CPc may comprise several sets of control parameters for performing several measurements at neighboring operating points, and the corresponding several measurements are all performed, stored in the table Meas[] and used thereafter. In other words, during each loop, several measurements can be performed, and these several measurements can be used to update the belief and determine the next current set of control parameters which may also comprise several sets of control parameters for performing several measurements, etc.

Once the quantum system has been measured with the current control parameters CPc, the current belief concerning the fluxmap is updated in an operation 230 by a function Bel(). Generally speaking, the function Bel() acts by creating a wide set of candidates by perturbating the values of the fluxmap parameters of the current set of fluxmap parameters FPc, and by deriving from these candidates a new current set of fluxmap parameters FPc using the table Meas[] to take into account the new measurement(s) from operation 220.

Figure 3 shows an exemplary embodiment of a function for performing function Bel(). In a first operation, the set of candidates CandS is generated by a function GenS() which receives the current set of fluxmap parameters FPc and may also receive the first set of fluxmap parameters FP1. In the example described herein, the function Gen() is arranged to produce a set of 2000 candidates in which, for each candidate, one or more of the parameters of the current set of fluxmap parameters has been perturbated with a Gaussian noise. Of course, other perturbations may be used and a different number of candidates can be produced. Alternatively, the set of candidates may comprise a first number of candidates based on the current set of fluxmap parameters FPc (for example 1000), and a second number of candidates based on the first set of fluxmap parameters FP1 (for example 1000). This allows to prevent cases where the function would get stuck in a non optimal minimum zone.

The set of candidates CandS is thereafter tested in an operation 310 by a function L() which computes a loss function for each candidate of CandS, and the results are stored in a table Loss[].

Figure 4 shows an exemplary embodiment of loss function L(). In the example of figure 4, the candidates of CandS are evaluated in series for simplicty's sake, but it is clear that the operations could be parallelized. It starts with an operation 400 in which the set of candidates CandS is received. In an operation 410, the set CandS is popped by a function Pop() and the function stops in an operation 499 if there is no more candidate Cand.

Else, a loop is performed in which the loss is computed for the candidate Cand based on each measurement in the table Meas[]. More precisely, table Meas[] is popped in an operation 420, and a function Res() tests whether this measurement is associated with the detection of a resonant frequency (as described above) in an operation 430.

If a resonant frequency was found, then the loss for candidate Cand receives the value shown in operation 440. In this operation, Nr is the number of measurements in table Meas() which show a resonant frequency, f(Mea) is the resonant frequency found for measurement Mea, and Circ(Cand ; CPc) calculates the fluxmap model with candidate Cand as the fluxmap parameters and the current control parameters CPc. Here, Circ() may for example be the function f() defined in page 4 above.

If a resonant frequency was found, then the loss for candidate Cand receives the value shown in operation 450. In this operation, Nnr is the number of measurements in table Meas() which do not show a resonant frequency, Df is the bandwidth in which the resonant frequency is searched for and *f*₀ is the center of this bandwidth. This second formula penalizes model frequencies that lie within the frequency bandwidth, but which were measured to have no resonance within this range. The closer the modelled frequency (Circ(Cand ; CPc)) to the center of the probed frequency band, the higher the penalty.

Once all the measures Mea have been dealt with for all the candidates Cand, table Loss[] comprises all the losses for all of the candidates.

The new current set of fluxmap parameters, or updated belief, FPc, can then be determined in an operation 320 by a function Chos(). Function Chos() may choose the candidate having the lowest loss score. Alternatively, function Chos() may also apply a BGFS minimization algorithm on a subset of the candidates having the lowest losses, and derive the updated belief FPc, effectively ending function Bel().

After the belief has been updated, the next set of current control parameters CPc can be determined in an operation 240 by a function Nxt(). Function Nxt() may perform relatively similarly to function Bel(), by providing a set of candidates which are within a chosen range from the current set of control parameters CPc so as to not move the flux too abruptly, and by choosing in this set the most promising starting point for the next loop.

This can be done here too by optimizing a loss function such as:
*L*(*Cand, Meal*[], *FPc) = w ℓ_{resonance}* + (1 - w) *ℓ_{neighbors}* with *ℓ_{resonance}* = $exp \left(\frac{\left|Circ\left(Cand, FPc\right)-Meal\left[f\right]\right|}{{σ}_{f}}\right)$ and ${l}_{neighbors} = {\sum }_{t = 1}^{T} exp \left(-\frac{{\left‖Cand-Meas\left[CPc, t\right]\right‖}^{2}}{{σ}_{d}}\right)$ where Meal[] is the last measure obtained, and w, *σ_{f}* and *σ_{d}* are loss function parameters.

The first term promotes selecting point whose resonant frequency according to fluxmap parameters *FPc* is close to *Meal*[*f*]. The second term promotes points which are far from previously sampled points. *w* balances between those two terms.

Alternatively, the next current set of control parameters can be determined by using the Fisher Information Matrix (FIM).

The FIM is a principled way to quantify the uncertainty in the parameters of a model. It is given defined with $\begin{matrix}FIM \left(Cand,Meas\left[\right],FPc\right) \\ = {\sum }_{t = 1}^{T} \frac{\partial f \left(Meas\left[CPc, t\right],FPc\right)}{\partial p} \frac{\partial f {\left(Meas\left[CPc, t\right],FPc\right)}^{T}}{\partial p} \\ + \frac{\partial f \left(Cand, FPc\right)}{\partial p} \frac{\partial f {\left(Cand, FPc\right)}^{T}}{\partial p}\end{matrix}$

And the loss is $L \left(Cand,Meas\left[\right],FPc\right) = - det FIM \left(Cand,Meas\left[\right],FPc\right)$

The FIM is useful for the following reasons. For a linear model, the FIM is the inverse of the variance of the score, which is the derivative of the log likelihood. As a result, the larger the FIM, the smaller the variance of the estimator.

This can achieved by e.g. maximizing the determinant of the FIM (see the loss function above). This is called D optimal design. It would also be possible to instead maximize the trace of the FIM. This is called A optimal design.

Once the new set of control parameters has been determined, the current set of parameters SPc has been updated, and an end condition can be tested by a function Thrsh() in an operation 250. This function can e.g. determine if the fitting of the measurements by the new current set of parameters SPc is close enough. If not, then the loops is repeated with operation 220. Else, the method may end in an operation 260, with the fluxmap parameters having been determined for the physical quantum system.

The above example makes several references to ATSs and quantum circuit using them.

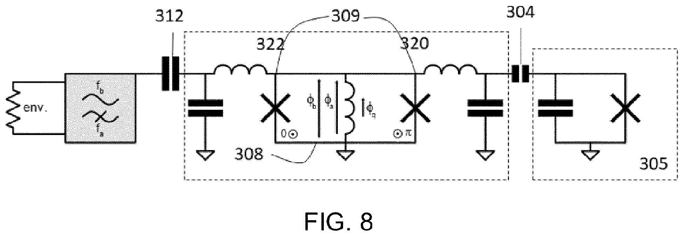

Figure 8 is provided as an example of such a circuit, which comprises a first non-linear superconducting circuit portion 306 and a non-linear superconducting circuit portion 305 which define respective qubit-hosting structures.

The non-linear superconducting circuit 306 comprises a linear microwave network such that when coupled via a linear coupler 309 to an ATS 308 which acts as an inductive element the non-linear superconducting circuit comprises at least 2 normal modes (or eigenmodes) *a* and *b* at frequency *fₐ* and *f_{b}* which participates in the ATS. This participation means that a portion or the entirety of the mode magnetic energy is stored in the ATS. This participation can be quantified by the zero-point fluctuation of the superconducting phase across the ATS, noted *φₐ* for mode *a* and *φ_{b}* for mode *b*. Among these embodiments, the non-linear superconducting circuit 306 can be a two-mode hybridized system (also known as "galvanic cat", for which the Applicant has filed patent application EP22306815.6 and EP22306816.4) for which two lumped modes couple strongly via the ATS.

When an external DC magnetic field is set such that a 0 mod 2*π* magnetic flux threads one of the loop and a *π* mod 2*π* (or conversely), we ensure the ATS Hamiltonian has its "sin sin" form. For clarity, the set-up applying the external DC magnetic field is not drawn on figure 9 but can be applied via 2 bottom mutual inductances of the ATS (e.g. in the form of coplanar waveguide flux lines through which a DC current flows, to thereby generate magnetic fields to thread the loops with a controllable amount of magnetic flux). A typical implementation consists in interleaving a bias-tee connected to a DC current source to input DC current into the system while letting the microwave radiations go through.

Microwave sources are set-up to modulate respectively the common and differential flux in the ATS which is required to activate parametric interactions. These microwave sources are represented by the 0 and π signs in the ATS. When these microwave sources are set at the frequency *fₚ* = |2*fₐ - f_{b}*|, the non-linear superconducting circuit 306 performs the 2-to-1 photon conversion between a first mode *a* referenced 320 and a second mode *b* referenced 322. To convert this 2-to-1 photon conversion into two-photon dissipation, the mode *b* is selectively coupled to a load (env.) via a linear coupler 312 and microwave filter 318 configured as a band pass filter with a frequency *f_{b}.* Alternatively (and preferably), the filter 318 may be configured as a band stop filter at a frequency *fₐ* using the CPWSFs designed according to the above, and may be placed in between the environment and the two modes to isolate the first mode and thus prevent the first mode from suffering additional losses coming from unwanted coupling to the load (i.e. preventing or minimizing this unwanted energy decay channel). Alternatively, it may be configured as a low-pass (respectively high-pass) filter if *fₐ > f_{b}* (resp *f_{b} > fₐ*). In other embodiments, the microwave filter 318 can be omitted when coupling between the load and substantially only the second mode can be established. Consequently, the man skilled in the art will understand that the first mode *a* has a high-quality factor, and the second mode *b* has a low-quality factor.

To perform cat qubit stabilization in mode *a*, which requires two-photon drive and dissipation, the *b* mode is eventually driven at its resonant frequency *f_{b}.* This drive is typically performed by a microwave source set at frequency *f_{b},* and typically provided either via a dedicated coplanar waveguide near to the part of the non-linear superconducting circuit 306 which hosts the majority of the second mode *b* referenced 322 (referred to as the buffer drive line), or via differentially pumping the ATS (via applying the appropriate RF signal through the associated flux lines) at the buffer frequency (as described for instance in: Berdou, Camille, et al. "One hundred second bit-flip time in a two-photon dissipative oscillator" PRX Quantum 4.2 (2023): 020350, doi 10.1103/PRXQuantum.4.020350).

In the following, first mode *a* hosts a cat qubit, and is also known as the cat qubit mode, whereas second mode *b* is used as a buffer in between the cat qubit and the environment.

In the above, all of the microwave sources can be seen as part of a command circuit which is configured to deliver one or more control signals to the qubit-hosting structures.

The non-linear superconducting circuit portion 305 hosts a control qubit. In various embodiments, the control qubit can be any superconducting qubit such as a transmon qubit, a flux-qubit or a fluxonium qubit or any bosonic qubit encoded in a resonator such as a Kerr cat qubit (detuned or not), another stabilized cat qubit device (squeezed or not), a GKP qubit, or a cat qubit confined via a two-photon exchange Hamiltonian.

The control qubit is coupled to the non-linear superconducting circuit portion 306 hosting a target qubit via a small linear coupler 304. The linear coupler 304 is arranged such that the control qubit slightly hybridizes with the cat qubit-hosting the target qubit which leads to a small participation of the control qubit in the ATS 308. This participation is denoted *φ_{q}.* In various embodiments, coupler 304 can be capacitive, inductive, galvanic or mediated via a resonating bus coupler or an additional linear microwave network.

In order to protect the hosted cat qubit (and more generally the hosted bosonic code qubit), the memory resonator can be protected from an energy decay channel from the physical qubit through a nearby coplanar waveguide at the memory frequency (e.g. through the buffer drive line and/or the ATS flux lines) by providing the buffer drive line and/or the ATS flux lines with one or more CPWSFs which stopband is centered on the hosted cat qubit frequency and is configured to act as a Purcell filter on the physical qubit. Purcell filters are disclosed in the articles by Sete et al. "Purcell effect with microwave drive: Suppression of qubit relaxation rate", arXiv:1401.5545 [quant-ph], doi 10.1103/PhysRevB.89.104516 and *"*Quantum theory of a bandpass Purcell filter for qubit readout", arXiv:1504.06030 [quant-ph], doi 10.1103/PhysRevA.92.012325. In this manner, the qubits are protected from circuit noise.

Furthermore, bosonic qubits are dynamically stabilized systems. In particular, for cat qubits, it is known that spurious resonant frequencies are turned on when pumps/drives are applied to the system. The articles by Carde, Léon, et al. "Flux-pump-induced degradation of T 1 for dissipative cat qubits." Physical Review Applied 23.2 (2025): 024073, and by Putterman, Harald, et al. "Preserving phase coherence and linearity in cat qubits with exponential bit-flip suppression" arXiv preprint arXiv:2409.17556 (2024) show that it is specifically the case when parametric pump is applied to ATS.

Thus, in order to further protect the hosted cat qubit (and more generally the hosted bosonic code qubit), the memory resonator can be protected from other energy decay channels at such parametrically activated spurious resonant frequencies by providing the buffer drive line and/or the ATS flux lines (or indeed, other coplanar waveguide control lines associated with the qubit) with one or more CPWSFs which stopband is centered on one of the spurious resonant frequencies. As can be appreciated, for multiple different spurious resonant frequencies, multiple different CPWSFs can be provided. In this manner, the qubits are further protected from circuit noise.

For the sake of completeness, cats qubits will be described in more detail below.

### A. Biased-noise qubits

Stabilized cat qubits are known to benefit from a noise bias. More precisely, an effective error channel (e.g., bit errors or "bit flips") is suppressed in an exponential way with the "size" - i.e., the average number of photons - of the Schrödinger cat states of the cat qubits. Other qubits are known to benefit from a noise bias, such as two-photon exchange qubits (as disclosed by Pop et al. "Coherent suppression of electromagnetic dissipation due to superconducting quasiparticles", Nature 508, 369-372, 2014, doi 10.1038/nature13017). In the following, cat qubits will be the main example discussed, but it should be kept in mind that the method applies to any biased-noise qubit having a dissipative stabilization scheme.

According to current knowledge, this suppression should apply to a large class of physical noise processes having a local effect on the phase space of a harmonic oscillator. This includes, but is not limited to, photon loss, thermal excitations, photon dephasing, and various nonlinearities induced by coupling to a Josephson junction.

Recent experiments in the context of quantum superconducting circuits have observed this exponential suppression of bit-flip errors with the average number of photons in the cat states. Because of this noise structure, it is considered that the use of a single repetition code is sufficient to correct the remaining error channel. Indeed, if one wishes to correct only the phase jump, it is sufficient to just use a phase jump error correction code. This can be, for example a repetition code defined in the dual base, or any other classical error correction code.

The field of quantum computing is quite young. This is even more true in the case of the cat qubit domain. In many ways, it behaves like a research domain. As a result, the preferred way of progress is to make changes which may appear very incremental at first sight, but which in fact require significant physics works to be validated and industrialized. In other words, whatever is considered to be the current state of the art is generally left unchanged until a significant roadblock is discovered. This means that known to work solutions are not easily replaced.

### B. Cat qubits

Part of the Applicant's research in the past years has concerned with the stabilization of cat qubits. In *"*Exponential suppression of bit-flips in a qubit encoded in an oscillator", Nature Physics, 2020, R. Lescanne *et al.* demonstrated that cat qubits can be stabilized with a non-linear conversion between two photons of a first mode a - memory mode or cat qubit mode - and one photon of a second mode b - buffer mode.

A cat qubit is defined as a two-dimensional manifold spanned by the so-called cat states $\left|{C}_{α}^{\pm }\right〉$ which are superpositions of two coherent states |*α*〉 and |-*α*〉: $\left|{C}_{α}^{\pm }\right〉 = {N}^{\pm } \left(\left|α\right〉\pm \left|-α\right〉\right)$ with: ${N}^{\pm } = \frac{1}{\sqrt{2 \left(1\pm {e}^{- 2 {\left|α\right|}^{2}}\right)}}$

Stabilized cat qubits are known to benefit from a high noise bias, which means that the bit-flip probability is exponentially smaller than the phase-flip probability. More precisely, an effective error channel (e.g., bit errors or "bit-flips") is suppressed in an exponential way with the "size" - i.e. the average number of photons *n̅ =* |*α*|² - of the Schrödinger cat states of the cat qubits. As previously mentioned, this exponential suppression of bit-flip errors is only at the cost of linear increase of phase-flip errors.

### C. Stabilization schemes

Cat qubits can be stabilized or confined by the following exemplary schemes:
a) a parametric dissipative stabilization, with jump operator ${L}_{2} = \sqrt{{κ}_{2}} \left({a}^{2}-{α}^{2}\right)$, where *κ*₂ is the two-photon dissipation rate, *a* is the photon annihilation operator and *α* is a complex number defining the cat qubit. This jump operator can be realized by coupling a lossy buffer mode b with dissipation rate *κ_{b}*, and a four-wave mixing device - typically a Josephson junction, an ATS or a DC bias coupled to Josephson junctions - to the cat qubit mode a and by engineering the Hamiltonian $\frac{H}{ℏ} = {g}_{2} \left({a}^{2}-{α}^{2}\right) {b}^{†} + h . c .$, where *b* is the photon annihilation operator of the buffer mode b and *g*₂ is the two-photon coupling rate, by applying to the four-wave mixing device a pump at frequency |2*fₐ - f_{b}*| and a drive of the buffer mode at frequency *f_{b}* provided *g*₂ < *κ_{b}.*
b) a Kerr Hamiltonian $\frac{H}{ℏ} = \frac{K}{2} \left({a}^{† 2}-{α}^{2}\right) \left({a}^{2}-\overline{{α}^{2}}\right)$, where *K* is the amplitude of the Kerr Hamiltonian, *a* is the photon annihilation operator, and |*α*|² is the mean photon number.
c) a detuned Kerr Hamiltonian $\frac{H}{ℏ} = \frac{K}{2} \left({a}^{† 2}-{α}^{2}\right) \left({a}^{2}-\overline{{α}^{2}}\right) - {Δa}^{†} a$, where *K* is the amplitude of the Kerr Hamiltonian, a is the photon annihilation operator, *α* is a complex number defining the cat qubit, and *Δ* is the detuning factor.
d) a two-photon exchange (TPE) Hamiltonian $\frac{H}{ℏ} = {g}_{2} \left({a}^{2}-{α}^{2}\right) {σ}_{+} + h . c .$, where *g*₂ is the complex two-photon coupling rate, *a* is the photon annihilation operator, *α* is a complex number defining the cat qubit, and *σ*_{±} are the lowering and raising operators of the two-level system. This Hamiltonian can be engineered in the same way as the parametric dissipative stabilization a).
e) a dissipative squeezing stabilization, with jump operator ${L}_{SC} = \sqrt{{κ}_{SC}} \left(\left(cosh\left(r\right)a+\right.\right.$ sinh(*r*)*e^{iθ}a*^{†})² - *α*²), where *κ_{SC}* is the squeezed two-photon dissipation rate, *a* is the photon annihilation operator, *α* is a complex number defining the cat qubit, r and *θ* are the modulus and argument of the complex squeezing parameter *ξ = re^{iθ}.* This jump operator can be realized by coupling a lossy buffer mode b with dissipation rate *κ_{b}*, and a four-wave mixing device - typically a Josephson junction or an ATS -, to the cat qubit mode a and by engineering the Hamiltonian $\frac{H}{ℏ} = {g}_{SC} {\left(\left(cosh\left(r\right)a+sinh\left(r\right){e}^{iθ}{a}^{†}\right.\right)}^{2} -$ *α*²) *b*^{†} + h.c., where *b* is the photon annihilation operator of mode b and *g_{SC}* is the squeezed two-photon coupling rate, with several pumps at frequencies |2*fₐ - f_{b}*|, *f_{b}* and 2*fₐ + f_{b}*, and a drive of the buffer mode b at frequency *f_{b}* provided *g_{SC}* < *κ_{b}.*
f) a variant of the previous stabilization scheme e), for which the Applicant filed the European patent application EP 23175147.0, in which a bosonic qubit - called *"moon cat qubit"* since the two blobs of the Wigner function have a crescent moon shape - is stabilized by engineering the Hamiltonian $\frac{H}{ℏ} = {g}_{2} \left({a}^{2}+{λa}^{†}a-{α}^{2}\right) {b}^{†} + h . c .$, where g₂ is the amplitude of a pump at frequency |2*fₐ - f_{b}*|, *a* is the annihilation operator of the cat qubit mode a, *λ* is a complex number which phase and amplitude result from the amplitude of longitudinal coupling produced by a pump at frequency *f_{b}*, *α* is a complex number resulting from a drive of the buffer mode b at frequency *f_{b}* and *b* is the annihilation operator of the buffer mode b; a comparison between the moon cat qubit and the squeezed cat qubit could be established by expressing *λ* as a function of the complex squeezing parameter *ξ* = *re^{iθ}* as follows: *λ* = 2tanh (*r*)*.*
g) a resonant dissipative stabilization, with jump operator ${L}_{2} = \sqrt{{κ}_{2}} \left({a}^{2}-{α}^{2}\right)$, where *κ*₂ is the two-photon dissipation rate, *a* is the photon annihilation operator and *α* is a complex number defining the cat qubit. This jump operator can be realized by coupling a lossy buffer mode b with dissipation rate *κ_{b}*, and a three-wave mixing device to the cat qubit mode a which engineers the Hamiltonian $\frac{H}{ℏ} = {g}_{2} \left({a}^{2}-{α}^{2}\right) {b}^{†} + h . c .$, where *b* is the photon annihilation operator of the buffer mode b provided the mode frequencies verify substantially 2*fₐ = f_{b}* and *g*₂ < *κ_{b}* to which a drive of the buffer mode at frequency *f_{b}* is added.

## Claims

1. Method for determining fluxmap parameters of a quantum system comprising a plurality of superconducting loops, comprising
a) receiving a quantum system fluxmap model comprising at least one fixed parameter forming a set of fluxmap parameters and at least one variable parameter forming a set of control parameters,
b) obtaining a first set of control parameters as a current set of control parameters and a first set of fluxmap parameters as a current set of fluxmap parameters,
c) controlling the quantum system with said current set of control parameters, and measuring at least one fluxmap-related physical quantity on the quantum system,
d) deriving a new current set of fluxmap parameters from said quantum system fluxmap model and from all of said at least one fluxmap-related physical quantity measured at the current and at previous iterations of operation c),
e) determining a new current set of control parameters based on said new current set of fluxmap parameters, said quantum system fluxmap model and said current set of control parameters,
f) repeating operations c) to e) until a condition relating to the quantum system fluxmap model and all of said at least one fluxmap-related physical quantity measured at the current and at previous iterations of operation c) is met.

2. Method according to claim 1, in which said quantum system comprises one or more asymmetric threaded squid (ATS) providing at least some of the superconducting loops, said control parameters comprise two ATS flux lines voltage controls, and in which said at least one measured fluxmap-related physical quantity is a spectroscopy function of a buffer mode of the quantum system.

3. Method according to claim 2, in which operation d) comprises:
d1) deriving a resonant frequency, or the absence thereof, from said measured at least one fluxmap-related physical quantity,
d2) determining a plurality of candidate set of fluxmap parameters derived from the current set of fluxmap parameters and/or said first set of fluxmap parameters,
d3) deriving said new current set of fluxmap parameters from said quantum system fluxmap model, said plurality of candidate set of fluxmap parameters and all of said at least one fluxmap-related physical quantity measured at the current and at previous iterations of operation c).

4. Method according to one of the preceding claims, in which operation e) comprises
e1) determining a plurality of candidate set of control parameters derived from the current set of control parameters,
e2) defining one of said plurality of candidate set of control parameters as said new current set of control parameters by applying said fluxmap model or its gradient to each of said candidate set of control parameters with said new current set of fluxmap parameters, and choosing said new current set of control parameters based on the results.

5. Method according to claim 4, in which operation e2) comprises calculating a loss function for each candidate in said set of control parameters according to the following formula: *L*(*Cand, Meal*[], *FPc*) *= w ℓ_{resonance}* + (1 - w) *ℓ_{neighbors}* with ${l}_{resonance} = exp \left(\frac{\left|Circ\left(Cand, FPc\right)-Meal\left[f\right]\right|}{{σ}_{f}}\right)$ and ${l}_{neighbors} = {\sum }_{t = 1}^{T} exp \left(-\frac{{\left‖Cand-Meas\left[CPc, t\right]\right‖}^{2}}{{σ}_{d}}\right)$ where *Circ*() is the fluxmap model, Cand is a candidate set of control parameters, FPc is the current set of fluxmap parameters, Meal[f] is the resonant frequency for the most recent measurement, T is the total number of measurements, *Meas*[*CPc, t*] is the set of control parameters of the t-th measurement, and w, *σ_{f}* and *σ_{d}* are loss function parameters.

6. Method according to claim 4, in which operation e2) comprises calculating a Fischer Information Matrix *FIM*(*Cand, Meas*[], *FPc*) = ${\sum }_{t = 1}^{T} \frac{\partial f \left(Meas\left[CPc, t\right],FPc\right)}{\partial p} \frac{\partial f {\left(Meas\left[CPc, t\right],FPc\right)}^{T}}{\partial p} + \frac{\partial f \left(Cand, FPc\right)}{\partial p} \frac{\partial f {\left(Cand, FPc\right)}^{T}}{\partial p}$, where Cand is a candidate set of control parameters, Meas[CPc,t] is the set of control parameters used for the t-th measurement, FPc is the current set of fluxmap parameters, and f() is the fluxmap model, and by choosing the candidate which optimizes the determinant of the FIM matrix or the trace of the FIM matrix.

7. Method according to one of the preceding claims, in which operations b) and c) comprise using several sets of current control parameters and obtaining several measurements, and in which operations d) and e) comprise using the corresponding several measurements.

8. A device comprising: a quantum system comprising a plurality of superconducting loops; and a command circuit configured to send one or more control signals to the quantum system to control the quantum system, wherein the command circuit is further configured to perform the method of one of claims 1 to 7.

9. A computer program product (120) comprising instructions (122) which, when executed by processing circuitry (102), causes the command circuit of claim 8 to carry out the method according to one of claims 1 to 7.

10. A computer-readable medium having stored thereon the computer program product of claim 9.
